# EUROPEAN PATENT APPLICATION

(11) **EP 3 200 321 A1**
(43) Date of publication of application: **02.08.2017**
(21) Application number: 15844848.0
(22) Date of filing: 11.09.2015
(51) Int. Cl.: H02K 1/27, H02K 1/22

(54) **PERMANENT MAGNET TYPE ROTOR AND PERMANENT MAGNET TYPE SYNCHRONOUS ROTARY ELECTRIC MACHINE**

(30) Priority: 26.09.2014 JP 2014197256
(71) Applicant: Kabushiki Kaisha Toshiba, Minato-ku, Tokyo 105-8001 (JP)
(72) Inventor: FUKUMOTO, Syou, Tokyo 104-0031 (JP); OOISHI, Koji, Tokyo 104-0031 (JP); MATSUSHITA, Makoto, Tokyo 105-8001 (JP); MISU, Daisuke, Tokyo 105-8001 (JP); TAKEUCHI, Katsutoku, Tokyo 105-8001 (JP); TAKAHASHI, Norio, Tokyo 105-8001 (JP); HASHIBA, Yutaka, Tokyo 105-8001 (JP); YUUKI, Kazuaki, Tokyo 105-8001 (JP); HASEBE, Toshio, Tokyo 105-8001 (JP)
(74) Representative: Awapatent AB
(86) International application number: PCT/JP2015/004637
(87) International publication number: WO 2016/047078

(57) **Abstract**

A permanent magnet synchronous rotating electrical machine (100) has: a rotor shaft (11) extending axially; a rotor core (12) in which flux barriers that spread toward the rotation axis center and in a circumferential direction in such a way as to form a convex curved surface and extend axially in each circumferential angle region, and the flat plate-shaped space that is located at a circumferential-direction center of the flux barriers and is thinner than radial width of the flux barriers, and includes laminated plates; a flat plate-like permanent magnet (51) provided in such a way as to occupy the flat plate-shaped space; a stator core (21) in which stator teeth (22) are formed and disposed on an outer surface of the rotor core (12) via a clearance, and protrude toward radially inner side; and multi-phase armature windings (24) of multiple poles wound around the stator teeth (22).

## Description

### TECHNICAL FIELD

The present invention described herein relates to a permanent magnet rotor and a permanent magnet synchronous rotating electrical machine.

### BACKGROUND ART

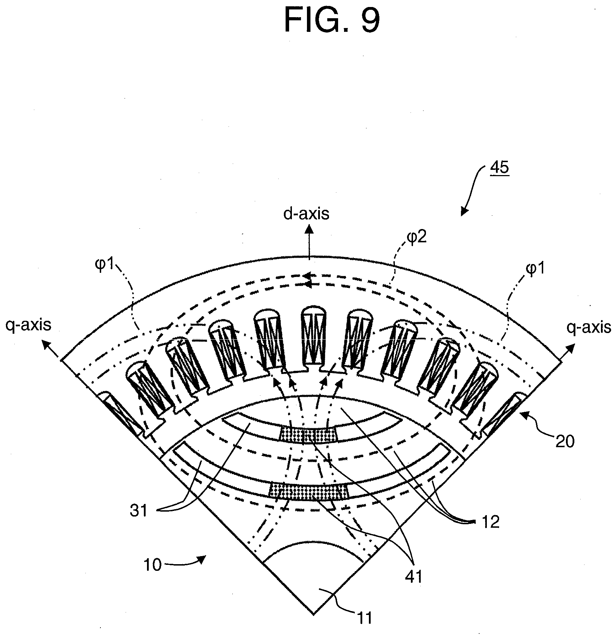

FIG. 9 is a cross-sectional view of one-quarter of a conventional permanent magnet synchronous rotating electrical machine taken along a plane perpendicular to an axial direction thereof. A permanent magnet synchronous rotating electrical machine 45 includes a rotor 10 and a stator 20. In a rotor core 12 of the rotor 10, magnetic barriers, or flux barriers 31, are formed in each circumferential region. In the example of FIG. 9, two layers of flux barriers 31 are formed in each circumferential region. At the circumferential center of each flux barrier 31, a permanent magnet 41 is provided.

### PRIOR ART DOCUMENTS

### PATENT DOCUMENTS

Patent document 1: Japanese Patent Application Laid-Open Publication No. 2006-121821
Patent document 2: Japanese Patent Application Laid-Open Publication No. 2009-194945

### SUMMARY OF THE INVENTION

### PROBLEMS TO BE SOLVED BY THE INVENTION

As shown in FIG. 9, it has been known that flux barriers 31 formed as a shape of elliptical arc in such a way as to go along the flow of q-axis magnetic flux makes reluctance torque maximized. However, the process of producing the permanent magnets 41 in such a way that the permanent magnets 41 fit in an elliptical arc-shaped space and inserting the permanent magnets 41 into the space is a factor behind a rise in production and assembly costs.

Moreover, if rare-earth magnets are used as the permanent magnets, more margin of amount of magnet makes its cost higher.

The present invention has been made to solve the problems described above. The object of the present invention is to lower the costs while ensuring the efficiency of the permanent magnet synchronous rotating electrical machine.

### MEANS FOR SOLVING THE PROBLEM

According to the present invention, there is provided a permanent magnet synchronous rotating electrical machine, comprising: a rotor shaft supported rotatably, the rotor shaft extending axially at a rotation axis center; a rotor core in which flux barriers and a flat plate-shaped space are formed, the flux barriers spreading in each circumferential angle region toward the rotation axis center and in a circumferential direction in such a way as to form a convex curved surface and to extend axially, the flat plate-shaped space being located at a circumferential-direction center of the flux barriers, being thinner than radial width of the flux barriers and spreading circumferentially and axially, the rotor core being fixed to the rotor shaft, the rotor core including laminated plates where a plurality of flat steel plates are laminated axially; a flat plate-like permanent magnet provided in such a way as to occupy the flat plate-shaped space; a stator core in which stator teeth are formed, the stator teeth being disposed on an outer surface of the rotor core in such a way as to be away from the rotor core are spaced out circumferentially to each other, the stator teeth extending axially and protruding toward radially inner side; and multi-phase armature windings of multiple poles wound around the stator teeth.

According to the present invention, there is provided a permanent magnet rotor, comprising: a rotor shaft supported rotatably, the rotor shaft extending axially at a rotation axis center; a rotor core in which flux barriers and a flat plate-shaped space are formed, the flux barriers spreading in each circumferential angle region toward the rotation axis center and in a circumferential direction in such a way as to form a convex curved surface and extend axially, the flat plate-shaped space being located at a circumferential-direction center of the flux barriers, being thinner than radial width of the flux barriers and spreading circumferentially and axially, the rotor core being fixed to the rotor shaft, the rotor core including laminated plates where a plurality of flat steel plates are laminated axially; and a flat plate-like permanent magnet provided in such a way as to occupy the flat plate-shaped space.

### ADVANTAGE OF THE INVENTION

According to the present invention, it is possible to lower the costs while ensuring the efficiency of the permanent magnet synchronous rotating electrical machine.

### BRIEF DESCRIPTION OF THE DRAWINGS

FIG. 1 is a cross-sectional view of one-quarter of a permanent magnet synchronous rotating electrical machine of a first embodiment taken along a plane perpendicular to an axial direction thereof.
FIG. 2 is a cross-sectional view of one of the through-holes formed in the rotor core taken along a plane perpendicular to the axial direction.
FIG. 3 is a first conceptual diagram for explaining magnetic flux distribution around a permanent magnet of the permanent magnet synchronous rotating electrical machine of the first embodiment.
FIG. 4 is a second conceptual diagram for explaining magnetic flux distribution around a permanent magnet of the permanent magnet synchronous rotating electrical machine of the first embodiment.
FIG. 5 is a third conceptual diagram for explaining magnetic flux distribution around a permanent magnet of the permanent magnet synchronous rotating electrical machine of the first embodiment.
FIG. 6 is a cross-sectional view of one-quarter of a permanent magnet synchronous rotating electrical machine of a second embodiment taken along a plane perpendicular to the axial direction.
FIG. 7 is a cross-sectional view of one of the through-holes formed in the rotor core, taken along a plane perpendicular to the axial direction.
FIG. 8 is a cross-sectional view of filling members taken along a plane perpendicular to the axial direction.
FIG. 9 is a cross-sectional view of one-quarter of a conventional permanent magnet synchronous rotating electrical machine taken along a plane perpendicular to the axial direction.

### DETAILED DESCRIPTION

Hereinafter, with reference to the accompanying drawings, embodiments of a permanent magnet rotor and a permanent magnet synchronous rotating electrical machine of the present invention will be described. The same or similar portions are represented by the same reference symbols, and a duplicate description will be omitted.

### [FIRST EMBODIMENT]

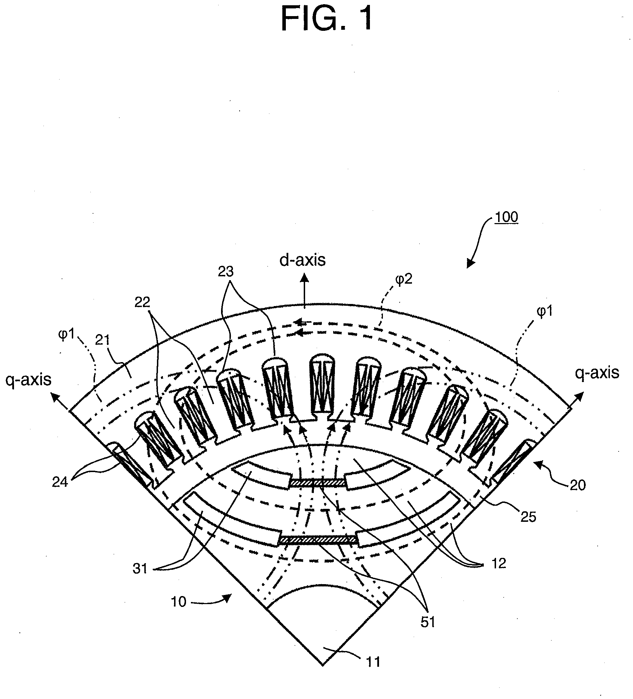

FIG. 1 is a cross-sectional view of one-quarter of a permanent magnet synchronous rotating electrical machine of a first embodiment taken along a plane perpendicular to an axial direction thereof. FIG. 1 shows only one-quarter of a sector of a permanent magnet synchronous rotating electrical machine 100, or a one-quarter circumferential angle region. In this case, the permanent magnet synchronous rotating electrical machine 100 is quadrupole. The permanent magnet synchronous rotating electrical machine 100 includes a rotor 10 and a stator 20.

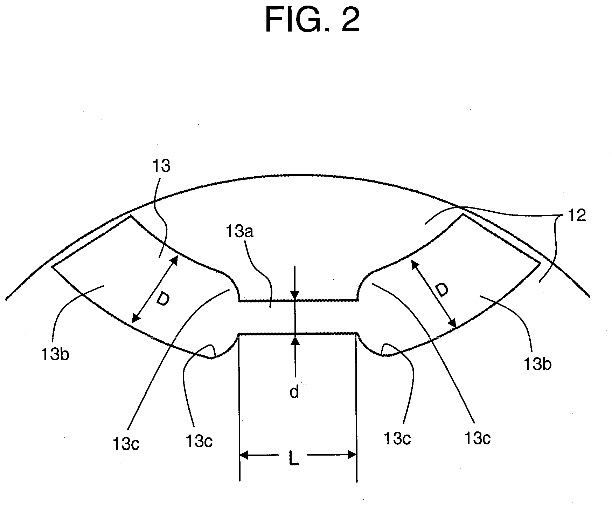

The rotor 10 includes a rotor shaft 11 and a rotor core 12. The rotor shaft 11 extends in the direction of a rotation axis, or extends axially. The rotor core 12 is disposed on a radial periphery out of the rotor shaft 11. The rotor core 12 includes laminated plates which are a plurality of flat steel plates laminated axially. The outer shape of the rotor core 12 is cylindrical. In each circumferential angle region of the rotor core 12, two through-holes 13 (one of them is shown in FIG. 2) are formed. Those two through-holes 13 spread circumferentially with a convex curved surface toward the center of the rotation axis, extend axially, and are in parallel to each other.

In a center region of each through-hole 13, a permanent magnet 51 is provided in such a way as to occupy a corresponding region. In each through-hole 13, in two side regions between which the permanent magnet 51 is located, flux barriers 31 are formed. The permanent magnets 51 are in the shape of a flat plate and extend circumferentially and axially. The permanent magnets 51 are arranged in such a way as to be parallel to each other and spaced out radially to each other.

In the radial direction, the permanent magnets 51 are arranged in such a way that the radially inner permanent magnet 51 and the radially outer permanent magnet 51 have the same polarity. That is, as for the inner permanent magnets 51 and the outer permanent magnets 51, there is a first arrangement by which the radially inner surfaces of both are of N-pole and the radially outer surfaces are of S-pole, or a second arrangement by which the radially inner surfaces of both are of S-pole and the radially outer surfaces are of N-pole. As for the permanent magnets in the circumferential angle regions that are adjacent to each other circumferentially, if one side is in the first arrangement, then the other side is in the second arrangement.

The stator 20 includes a stator core 21 and armature windings 24. The stator core 21 includes laminated plates which are flat plates laminated axially. On the radially inner surface of the laminated plates, stator slots 23 are formed in such a way as to face the radially outer surface of the rotor 10 across a gap 25 and extend axially. That is, on the radially inner surface of the stator core 21, stator teeth 22 are formed in such a way as to protrude toward the inner side. Around the stator teeth 22, the armature windings 24 are wound.

The radial direction of both circumferential ends of each circumferential angle region corresponds to q-axis direction, and the radial direction of the circumferential center of each circumferential angle region corresponds to d-axis direction. In FIG. 1, magnetic flux ϕ1 of the permanent magnets 51 are shown by two-dot chain lines.

Magnetic flux ϕ1 is formed in such a way as to pass through the rotor core 12 and the stator core 21, between the permanent magnets 51 of the circumferential direction regions that are adjacent to each other. Accordingly, in the radial direction, magnetic flux ϕ1 is formed along d-axis. Meanwhile, magnetic flux ϕ2, which is a reluctance component associated with a rotating magnetic field generated in the stator core 21, is formed along the flux barriers 31 that are formed in the rotor core 12. Accordingly, in the radial direction, magnetic flux ϕ2 is formed along q-axis.

FIG. 2 is a cross-sectional view of one of the through-holes formed in the rotor core taken along a plane perpendicular to the axial direction. That is, only one of the two through-holes 13 is shown. The through-hole 13 includes a center region 13a; and barrier regions 13b, which are located on both sides of the center region 13a. The center region 13a is space in which permanent magnet 51 is placed. The barrier regions 13b on both sides of the center region 13a are the space where the flux barriers 31 (FIG. 1) are formed.

The center region 13a is formed in such a way that the radially inner surfaces and the radially outer surfaces are parallel to each other, in order to match the shape of the flat-plate permanent magnets 51. As shown in FIG. 2, the radial width of the center region 13a is denoted by d, and the circumferential length is denoted by L. The width d is set by taking into account each of the clearances between the permanent magnet 51 and the rotor core 12 as well as the thickness of the permanent magnet 51. If the permanent magnet 51 is extremely thin, demagnetization occurs in the permanent magnet 51. A required thickness needs to be secured in view of this fact. After the required thickness is ensured, in terms of costs, the permanent magnet 51 is desirably made as thin as possible without hampering the functionality thereof. That is, it is desirable that the width d be as thin as possible while being greater than or equal to the required thickness.

The radial width of the barrier regions 13b is denoted by D. Width D of the barrier regions 13b is greater than or equal to a width that can ensure a required value of magnetic resistance for the barrier regions 13b to achieve the functionality of the flux barriers 31. As described above, the width d of the center region 13a should be larger than or equal to required thickness d0 but preferably be as small as possible. Meanwhile, the width D of the barrier regions 13b needs to be larger than or equal to required value D0. In general, The value D0 that is required for the width D of the barrier regions 13b is larger than the required thickness d0. Hereinafter, such a general case will be described as an example.

As described above, the center region 13a and the barrier regions 13b are different in width; the latter is larger than the former in width. The through-hole 13 as a whole is in a stepped shape. Groove portions 13c of the barrier regions 13b that are connected to the center region 13a are formed into a smoothly curved surface as shown in FIG. 2.

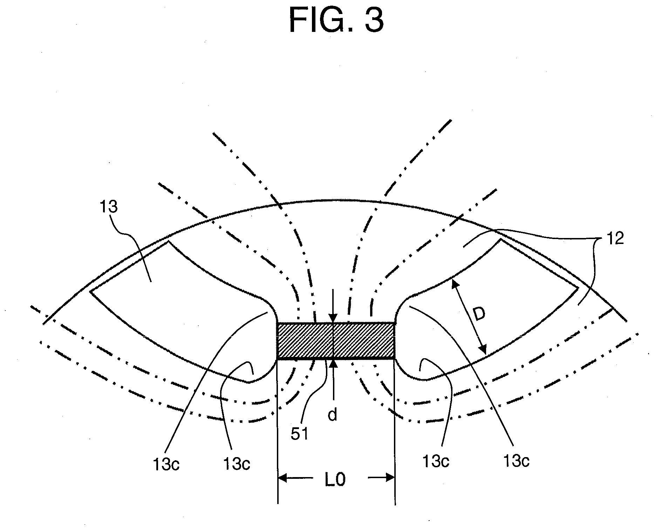

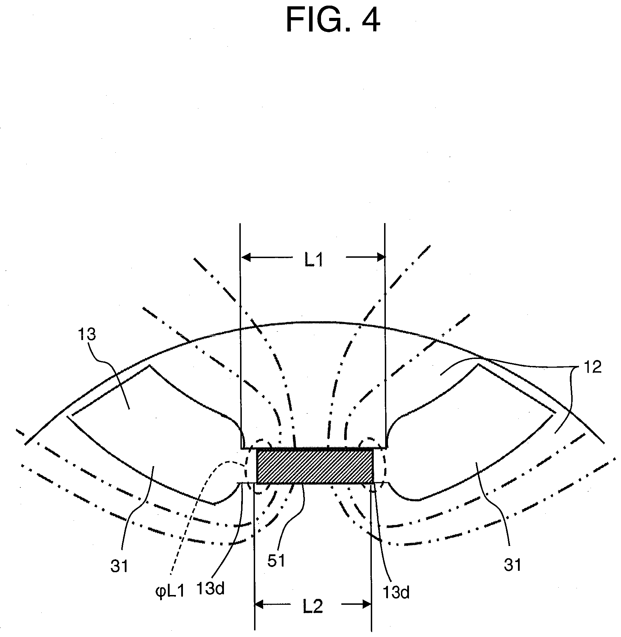

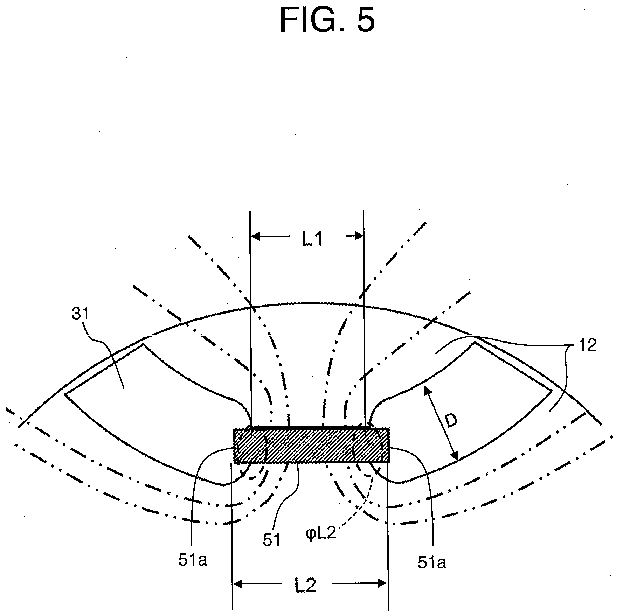

FIG. 3 is a first conceptual diagram for explaining magnetic flux distribution around a permanent magnet of the permanent magnet synchronous rotating electrical machine of the first embodiment. FIG. 4 is a second conceptual diagram of the same. FIG. 5 is a third conceptual diagram of the same.

FIG. 3 shows the case where the circumferential-direction length of the permanent magnet and the circumferential-direction length of the center region 13a of the through-hole 13 are equal and both are L0. Since both are equal in length, all magnetic field lines that come out of the permanent magnet 51 or enter the permanent magnet 51 pass through the rotor core 12. That is, since the groove portions 13c are the smoothly curved surfaces, the magnetic field lines that pass near the end portions of the permanent magnet 51 pass through the rotor core 12 along the groove portions 13c.

Since the groove portions 13c are formed as the smoothly curved surfaces, the magnetic field lines arising from the permanent magnet 51 are formed with an appropriate density without being squeezed. Moreover, the occurrence of a local magnetic saturation is suppressed. As a result, the distribution of magnetic field lines is optimized, thereby contributing to an improvement in efficiency.

FIG. 4 shows the case where circumferential-direction length L2 of the permanent magnet is less than circumferential-direction length L1 of the center region 13a of the through-hole 13. In this case, there are non-occupied regions 13d, where there is no permanent magnet 51, near both ends of the center region 13a. Radial width of the non-occupied regions 13d is d, which is less than the width required for the flux barriers 31 radially. This means that the non-occupied regions 13d do not have a magnetic resistance that is required for the flux barriers.

As a result, a magnetic field line that passes near both radial ends of the permanent magnet 51 takes a short path in such a way as to pass through the non-occupied regions 13d, as indicated by dashed line ϕL1 in FIG. 4. The short path represents a leakage flux, which does not become a magnetic flux connecting the rotor 10 and the stator 20. The larger the difference between the circumferential-direction length L1 of the center region 13a and the circumferential-direction length L2 of the permanent magnet becomes, the greater the leakage flux will be. The magnetic field lines caused by the permanent magnet contribute to the generation of torque when the magnetic field lines penetrate into the stator's side. However, the presence of leakage flux leads to the generation of magnetic field lines that do not contribute to the generation of torque, resulting in a drop in efficiency.

FIG. 5 shows the case where the circumferential-direction length L2 of the permanent magnet is larger than the circumferential-direction length L1 of the center region 13a of the through-hole 13. That is, in this case, the two ends of the permanent magnet 51 protrude into the flux barriers 31. The portions protruding into the flux barriers 31 will be referred to as protruding portions 51a. In this case, there are cases where the distance between the protruding portions 51a of the permanent magnet 51 and the closest rotor core 12 is less than the width that is required for the flux barriers 31 in the radial direction. In those cases, a magnetic field line caused by a protruding portion 51a of the permanent magnet 51 takes a short path that connects the protruding portion 51a and the rotor core 12 closest to the protruding portion 51a, as indicated by dashed line ϕL2 in FIG. 5. That is, a leakage flux is generated.

If the distance between an area near the tip of the permanent magnet 51 and the rotor core 12 closest thereto is greater than the width that is required for the flux barriers 31 in the radial direction, a magnetic field line resulting from the area near the tip of the permanent magnet 51 does not pass through the rotor core 12. That is, in such cases as where the two ends of the permanent magnet 51 protrude into the flux barriers 31 as shown in FIG. 5, the magnetic field lines arising from the area near the two ends of the permanent magnet 51 do not contribute to the generation of torque, leading to a decline in efficiency as in the case of FIG. 4.

Therefore, it is preferred that the circumferential-direction length of the permanent magnet be as equal as possible to the circumferential-direction length of the center region 13a of the through-hole 13.

As described above, according to the present embodiment, the formation of a short path of magnetic field lines arising from permanent magnets is suppressed. Moreover, the occurrence of local magnetic saturation is suppressed. Accordingly, a more balanced arrangement of magnetic field lines can be realized. By optimizing the arrangement of magnetic field lines, it is possible to make the magnetic field lines more contribute to the generation of torque. Therefore, the external dimensions of the permanent magnets 51 can be kept to a minimum level required. As a result, it is possible to reduce costs while ensuring the efficiency of the permanent magnet synchronous rotating electrical machine.

### [SECOND EMBODIMENT]

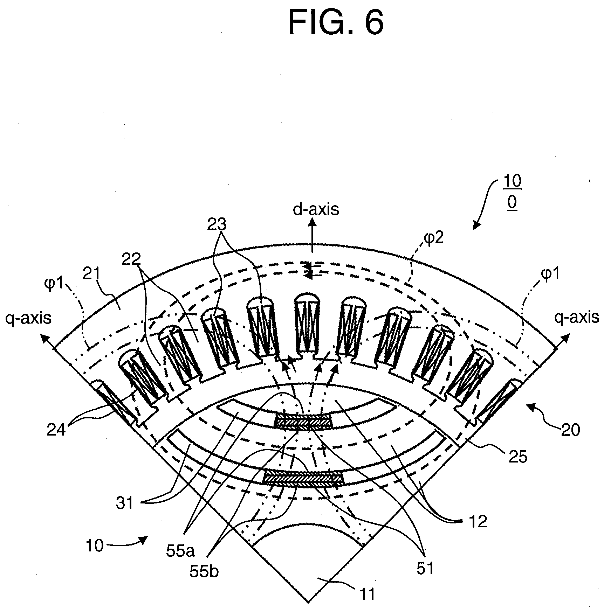

FIG. 6 is a cross-sectional view of one-quarter of a permanent magnet synchronous rotating electrical machine of a second embodiment taken along a plane perpendicular to the axial direction. The present embodiment is a variant of the first embodiment. A permanent magnet synchronous rotating electrical machine 100 of the second embodiment includes, inside the rotor core 12, outer-side filling members 55a and inner-side filling members 55b.

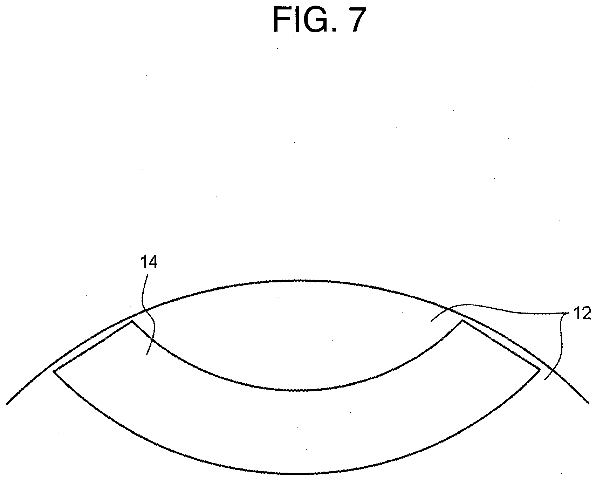

FIG. 7 is a cross-sectional view of one of the through-holes formed in the rotor core, taken along a plane perpendicular to the axial direction. The through-hole 14 of the rotor core 12 of the present embodiment is formed into an arc shape in the circumferential direction. In FIG. 7, only one of the two through-holes 14 is shown.

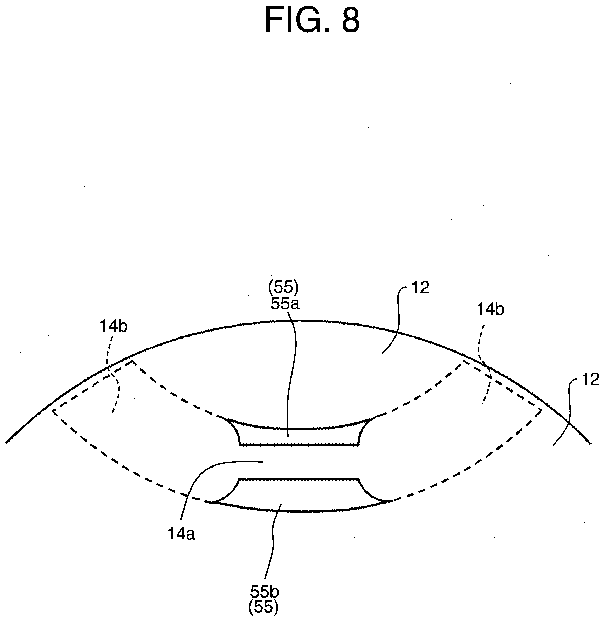

FIG. 8 is a cross-sectional view of filling members taken along a plane perpendicular to the axial direction. The filling members 55 are provided in the circumferential-direction center portions of the through-hole 14. The filling members 55 include an outer-side filling member 55a and an inner-side filling member 55b, both of which extend axially. The outer-side filling member 55a and the inner-side filling member 55b are made of magnetic material. The radially outer side of the outer-side filling member 55a is formed into a shape of a surface that comes in close contact with the rotor core 12; the radially inner side is formed into a shape of a plane that is perpendicular to a surface containing a rotation axis center line. The radially inner side of the inner-side filling member 55b is formed into a shape of a surface that comes in close contact with the rotor core 12; the radially outer side is formed into a shape of a plane that is perpendicular to a surface containing a rotation axis center line.

Each of the radially inner-side surface of the outer-side filling member 55a and the radially outer-side surface of the inner-side filling member 55b is attached in such a way as to be parallel to each other. After each of the outer-side filling member 55a and the inner-side filling member 55b is attached, the remaining space inside the through-hole 14 is a center region 14a and barrier regions 14b. In the center region 14a, which is located between the surfaces parallel to each other at the center, a permanent magnet 51 (FIG. 6) is provided. The barrier regions 14b, which are located on both sides of the center region 14a, are the space where flux barriers 31 (FIG. 6) are formed.

During the assembly process, after the rotor core 12 is assembled, the outer-side filling member 55a and the inner-side filling member 55b may be attached to the rotor core 12 before the permanent magnet 51 is inserted. Alternatively, the permanent magnet 51 may be mounted before the outer-side filling member 55a and the inner-side filling member 55b are sequentially inserted; or the outer-side filling member 55a, the rotor core 12, and the inner-side filling member 55b may be mounted in this order or in the reverse order.

As described above, according to the present embodiment, the filling members 55 are made of magnetic material. In terms of magnetism, the filling members 55 are small in magnetic resistance as in the rotor core 12, and almost the same magnetic field line distribution as in the first embodiment can be obtained, and almost the same level of efficiency as that of the first embodiment can be ensured. Moreover, the shape of the through-hole 14 formed in the laminated plates is simple, making it easier to process and handle. Moreover, it is possible to ensure a higher level of strength than required.

### [OTHER EMBODIMENTS]

The present invention is described above by way of several embodiments. However, those embodiments are presented only as examples without any intention of limiting the scope of the present invention.

Those embodiments may be embodied in other various forms. Various omissions, replacements and changes may be made without departing from the subject-matter of the invention.

The above embodiments and variants thereof are within the scope and subject-matter of the invention, and are similarly within the scope of the invention defined in the appended claims and the range of equivalency thereof.

### EXPLANATION OF REFERENCE SYMBOLS

10: rotor, 11: rotor shaft, 12: rotor core, 13: through-hole, 13a: center region, 13b: barrier regions, 13c: groove portion, 13d: non-occupied region, 14: through-hole, 14a: center region, 14b: barrier region, 20: stator, 21: stator core, 22: stator teeth, 23: stator slot, 24: armature windings, 25: gap, 31:lux barrier, 41: permanent magnet, 45: permanent magnet synchronous rotating electrical machine, 51: permanent magnet, 51a: protruding portion, 55: filling member, 55a: outer-side filling member, 55b: inner-side filling member, 100: permanent magnet synchronous rotating electrical machine

## Claims

1. A permanent magnet synchronous rotating electrical machine, comprising:
a rotor shaft supported rotatably, the rotor shaft extending axially at a rotation axis center;
a rotor core in which flux barriers and a flat plate-shaped space are formed, the flux barriers spreading in each circumferential angle region toward the rotation axis center and in a circumferential direction in such a way as to form a convex curved surface and to extend axially, the flat plate-shaped space being located at a circumferential-direction center of the flux barriers, being thinner than radial width of the flux barriers and spreading circumferentially and axially, the rotor core being fixed to the rotor shaft, the rotor core including laminated plates where a plurality of flat steel plates are laminated axially;
a flat plate-like permanent magnet provided in such a way as to occupy the flat plate-shaped space;
a stator core in which stator teeth are formed, the stator teeth being disposed on an outer surface of the rotor core in such a way as to be away from the rotor core are spaced out circumferentially to each other, the stator teeth extending axially and protruding toward radially inner side; and
multi-phase armature windings of multiple poles wound around the stator teeth.

2. The permanent magnet synchronous rotating electrical machine according to claim 1, wherein
the flux barriers are formed in such a way that groove portions on radially inner side and radially outer side of surfaces adjacent to the flat plate-shaped space are formed into a smoothly curved surface.

3. The permanent magnet synchronous rotating electrical machine according to claim 1 or 2, wherein
the laminated plates are formed in such a way that a through-hole is formed axially and have a shape corresponding to the flat plate-shaped space in a central portion of the circumferential direction of the flux barriers.

4. The permanent magnet synchronous rotating electrical machine according to claim 1 or 2, wherein:
a through-hole is formed axially in such a way as to maintain radial width of the flux barriers at the flux barriers and at a center of the circumferential direction in the laminated plates; and
the rotor core further includes filling members that are made of magnetic material and are provided along radially inner side and radially outer side of the permanent magnet in such a way as to fill space between the laminated plates and the permanent magnet.

5. A permanent magnet rotor, comprising:
a rotor shaft supported rotatably, the rotor shaft extending axially at a rotation axis center;
a rotor core in which flux barriers and a flat plate-shaped space are formed, the flux barriers spreading in each circumferential angle region toward the rotation axis center and in a circumferential direction in such a way as to form a convex curved surface and extend axially, the flat plate-shaped space being located at a circumferential-direction center of the flux barriers, being thinner than radial width of the flux barriers and spreading circumferentially and axially, the rotor core being fixed to the rotor shaft, the rotor core including laminated plates where a plurality of flat steel plates are laminated axially; and
a flat plate-like permanent magnet provided in such a way as to occupy the flat plate-shaped space.
